# EUROPÄISCHE PATENTSCHRIFT

(11) **EP 3 207 295 B1**
(45) Veröffentlichungstag und Bekanntmachung des Hinweises auf die Patenterteilung: **05.09.2018**
(21) Anmeldenummer: 15781638.0
(22) Anmeldetag: 15.10.2015
(51) Int. Cl.: F16K 11/074

(54) **VENTILEINRICHTUNG**
VALVE DEVICE
DISPOSITIF DE SOUPAPE

(30) Priorität: 17.10.2014 DE 102014221180
(43) Veröffentlichungstag der Anmeldung: 23.08.2017
(73) Patentinhaber: Mack & Schneider GmbH, 70794 Filderstadt (DE)
(72) Erfinder: BACHOFER, Steffen, 70794 Filderstadt (DE)
(74) Vertreter: Clarenbach, Carl-Philipp
(86) Internationale Anmeldenummer: PCT/EP2015/073915
(87) Internationale Veröffentlichungsnummer: WO 2016/059170

(56) Entgegenhaltungen:
- DE-C- 675 735
- FR-A- 646 259
- US-A- 4 112 975

## Beschreibung

Die Erfindung betrifft eine Ventileinrichtung mit einem Ventilgehäuse, das wenigstens drei Anschlussöffnungen aufweist, die in jeweils eine Kammer der Ventileinrichtung münden.

Ventileinrichtungen sind aus dem Stand der Technik grundsätzlich bekannt. Um beispielsweise in einem Kühlkreislauf eines Kraftfahrzeugs einen Fluidstrom zu steuern oder zu regeln, ist es bekannt, eine Ventileinrichtung einzusetzen, die zumindest einen Durchströmungsquerschnitt in dem Fluidkreislauf bei Bedarf verschließt oder freigibt. Weist der Kühlkreislauf mehrere Teilkreisläufe auf, so ist es auch bekannt, durch ein Ventil das Fluid einem Hauptkühlkreis oder einem Hilfskühlkreis zukommen zu lassen, indem ein Durchströmungsquerschnitt freigegeben und ein anderer Durchströmungsquerschnitt verschlossen wird. Dazu weist die Ventileinrichtung beispielsweise ein Ventilgehäuse mit drei Anschlussöffnungen auf, von denen zwei als Zulauföffnungen und eine als Ablauföffnung dient. In dem Ventilgehäuse sind Ventilelemente vorgesehen, die den Fluidstrom aus den Zulauföffnungen zu der Ablauföffnung bedarfsgerecht freigeben oder verhindern. Natürlich ist es auch denkbar, eine derartige Funktion durch mehrere Ventileinrichtungen zu lösen. Das Vorsehen mehrerer Ventilelemente in einem zumindest die drei Anschlussöffnungen aufweisenden Ventilgehäuse bietet jedoch eine besonders kompakte Lösung, die insbesondere im Kraftfahrzeugbau und den dort vorherrschenden engen Bauraumverhältnissen von Vorteil ist. Schwierig ist es jedoch, dabei aufgrund der gegebenenfalls vorliegenden Druckverhältnisse in dem Fluid eine ausreichende Dichtheit zu gewährleisten, wenn die Durchströmungsquerschnitte eigentlich verschlossen sein sollten.

Die Druckschrift DE 675 735 C beschreibt eine Ventileinrichtung mit den Merkmalen des Oberbegriffs des Anspruchs 1. Die Ventileinrichtung weist drei Kammern, die durch zwei Dichtscheibeneinheiten mit jeweils einer feststehenden und einer drehbaren Dichtscheibe voneinander getrennt sind, auf, wobei die drehbaren Dichtscheiben drehfest miteinander verbunden sind. Die Ventileinrichtung ermöglicht insbesondere die Entleerung eines Zapfschlauchs nach Beendigung eines Zapfvorgangs durch eine separate Rückführungsleitung. Die Druckschrift FR 646 259 A zeigt eine Ventileinrichtung mit drei drehbaren Dichtscheiben und jeweiligen Ventilsitzen, wobei die drehbaren Dichtscheiben drehfest über eine Kreuzschlitzkupplung miteinander verbunden sind. US 4 112 975 A offenbart eine Ventileinrichtung, in der zwei Trennwände vier separate Kammern definieren. Die Ventileinrichtung weist zwei Dichtscheibeneinheiten mit jeweils einer feststehenden und einer drehbaren Dichtscheibe auf, wobei die drehbaren Dichtscheiben drehfest miteinander verbunden sind, und ermöglicht es, ein Turbinenlager über zwei separate Kreisläufe mit Schmieröl zu versorgen.

Der Erfindung liegt die Aufgabe zugrunde, eine Ventileinrichtung zu schaffen, die einerseits kompakt gebaut ist und andererseits einen hohen Dichtheitsgrad gewährleistet, so dass insbesondere unerwünschte Leckageströme vermieden werden.

Die der Erfindung zugrunde liegende Aufgabe wird durch eine Ventileinrichtung mit den Merkmalen des Anspruchs 1 gelöst. Diese hat den Vorteil, dass aufgrund der Ausgestaltung der Ventilelemente ein hoher Dichtheitsgrad auf einfache Art und Weise gewährleistet und gleichzeitig eine einfache und konstruktive Gestaltung möglich ist. Die erfindungsgemäße Ventileinrichtung weist dazu ein Ventilgehäuse auf, das wenigstens drei Anschlussöffnungen aufweist, die in jeweils eine Kammer der Ventileinrichtung münden. Weiterhin weist die erfindungsgemäße Ventileinrichtung zwei voneinander beabstandet angeordnete Dichtscheibeneinheiten auf, die jeweils zwischen zwei benachbarten Kammern liegen und aneinanderliegend eine feststehende und mindestens eine verdrehbare Dichtscheibe aufweisen, wobei die verdrehbare Dichtscheibe und die feststehende Dichtscheibe jeder Dichtscheibeneinheit jeweils mindestens eine Durchströmungsöffnung aufweisen, um in zumindest einer Überlappungsstellung der Durchströmungsöffnungen einen Durchströmungsquerschnitt zwischen den jeweils benachbarten Kammern freizugeben. Weiterhin weist die erfindungsgemäße Ventileinrichtung eine Betätigungswelle auf, die mit den verdrehbaren Dichtscheiben drehfest verbunden ist. Es sind also zwei Dichtscheibeneinheiten vorgesehen, die in dem Ventilgehäuse die drei Kammern voneinander trennen, wenn die Durchströmungsöffnungen der jeweils aneinander liegenden Dichtscheiben nicht in einer Überlappungsstellung stehen. Durch eine einzige Betätigungswelle werden die verdrehbaren Dichtscheiben der beiden Dichtscheibeneinheiten bei Bedarf verdreht, um an zumindest einer der Dichtscheibeneinheiten einen Durchströmungsquerschnitt freizugeben und damit eine Strömung von einer Kammer in die benachbarte Kammer zu erlauben. Durch das Vorsehen von zwei Dichtscheibeneinheiten zum Trennen der Kammern und damit der Anschlussöffnungen voneinander, wird eine besonders kompakte Lösung der Ventileinrichtung geboten. Dadurch, dass nur eine Betätigungswelle notwendig ist, um die beiden verdrehbaren Dichtscheiben zu betätigen, sind deren Verdrehbewegungen zwar starr miteinander gekoppelt, jedoch durch die entsprechende Anordnung und Ausbildung der jeweiligen Durchströmungsöffnungen lassen sich unterschiedliche Schaltzustände der Ventileinrichtung auf einfache Art und Weise ermöglichen, während lediglich eine einzige Antriebseinrichtung zum Verdrehen der Betätigungswelle notwendig ist. Dadurch ist die Ventileinrichtung zum einen kostengünstig darstellbar und zum anderen wenig fehleranfällig.

Erfindungsgemäß ist vorgesehen, dass jede Dichtscheibeneinheit zwei verdrehbare Dichtscheiben aufweist, die jeweils mit der Betätigungswelle drehfest verbunden sind und auf jeweils einer Stirnseite der jeweiligen feststehenden Dichtscheibe aufliegen. Jede feststehende Dichtscheibe ist somit zwischen zwei verdrehbaren Dichtscheiben angeordnet, wobei die drei Dichtscheiben an ihren Stirnseiten flächig aneinander anliegen. Die beiden außenliegenden verdrehbaren Dichtscheiben sind dabei derart ausgebildet, dass die jeweiligen Durchströmungsöffnungen identisch ausgebildet und axial übereinander liegend ausgerichtet sind, so dass sich zwischen der einen verdrehbaren Dichtscheibe und der feststehenden Dichtscheibe sowie zwischen der anderen verdrehbaren Dichtscheibe und der feststehenden Dichtscheibe jeweils der gleiche Durchströmungsquerschnitt beim Verdrehen der verdrehbaren Dichtscheiben ergibt. Dadurch, dass zwei verdrehbare Dichtscheiben vorgesehen sind, die beidseits der verschiedenen Dichtscheiben angeordnet sind, wird erreicht, dass unabhängig davon, wie sich ein Druckgefälle über die Dichtscheibeneinheit einstellt, stets zumindest die verdrehbare Dichtscheibe gegen die feststehende Dichtscheibe axial gepresst wird, auf welche der höhere Fluid-Druck wirkt. Dadurch wird insbesondere in geschlossenem Zustand der Ventileinrichtung gewährleistet, also wenn die entsprechende Dichtscheibeneinheit keinen Durchströmungsquerschnitt freigibt, dass durch den Fluiddruck die Dichtscheiben der Dichtscheibeneinheit aneinander gepresst werden und dadurch eine hohe Dichtheit mit keinen oder nur geringen Leckageströmen gewährleistet ist. Insbesondere bei Druckschwankungen, die sich aus dem Betrieb eines die Ventileinrichtung aufweisenden Gesamtsystems ergeben können, und die dazu führen, dass sich die Druckverhältnisse zwischen den benachbarten Kammern umkehren, wird dann die andere verdrehbare Dichtscheibe gegen die feststehende Dichteinheit gepresst und dadurch die Dichtscheibe weiterhin gewährleistet.

Besonders bevorzugt ist vorgesehen, dass zwischen den beiden Dichtscheibeneinheiten ein Federelement, insbesondere eine Schraubenfeder, vorgespannt angeordnet ist, wobei sich das Federelement einendig an einer der verdrehbaren Dichtscheiben der einen Dichtscheibeneinheit und anderendig an einer der verdrehbaren Dichtscheiben der anderen Dichtscheibeneinheit abstützt. Das Federelement gewährleistet, dass auch dann, wenn in der Kammer zwischen den beiden Dichtscheibeneinheiten ein nur geringer Fluid-Druck vorherrscht, die jeweils in dieser Kammer liegenden verdrehbaren Dichtscheiben gegen die jeweils feststehende Dichtscheibe der jeweiligen Dichtscheibeneinheit gedrängt werden, um die Dichtheit des Systems zu gewährleisten.

Gemäß einer vorteilhaften Weiterbildung der Erfindung ist weiterhin vorgesehen, dass der einen Dichtscheibeneinheit ein weiteres Federelement, insbesondere eine weitere Schraubenfeder, zugeordnet ist, das sich einendig ventilgehäuseseitig und anderendig an der einen Dichtscheibeneinheit abstützt. Das weitere Federelement ist somit zwischen der einen Dichtscheibeneinheit und insbesondere einem Ventilgehäuseboden oder ein das Ventilgehäuse verschließenden Ventilgehäusedeckel verspannt angeordnet. Insbesondere ist dabei vorgesehen, dass sich das weitere Federelement an einer der verdrehbaren Dichtscheiben der Dichtscheibeneinheit abstützt. Insbesondere, wenn wie zuvor beschrieben, zwischen den beiden Dichtscheibeneinheiten ein Federelement vorgesehen ist, werden dadurch bei der einen Dichtscheibeneinheit beide verdrehbaren Dichtscheiben jeweils gegen die feststehende Dichtscheibe gedrängt, wodurch ein besonders hoher Dichtheitsgrad gewährleistet ist. Gleichzeitig wird dadurch auch die eine Dichtscheibeneinheit gegen die andere Dichtscheibeneinheit - unter Zwischenschaltung des Federelementes - durch das weitere Federelement gedrängt.

Gemäß einer vorteilhaften Weiterbildung der Erfindung ist ferner vorgesehen, dass das weitere Federelement zwischen der Dichtscheibeneinheit beziehungsweise der verdrehbaren Dichtscheibe der einen Dichtscheibeneinheit und einem einem Ende der Betätigungswelle zugeordneten Koppelelement vorgespannt ist, wobei sich das Koppelelement insbesondere axial an dem Ventilgehäuse oder an der Betätigungswelle abstützt und abschnittsweise durch eine Öffnung des Ventilgehäuses oder -Deckels hindurchragt. Das Koppelelement dient somit als Anschlusselement für die zuvor bereits erwähnte Antriebseinrichtung zum Betätigen der Betätigungswelle. Das Koppelelement ist dabei insbesondere aus einem Werkstoff gefertigt, der zusammen mit dem Gehäuse durch die axiale Anlage des Koppelelements an dem Gehäuse eine Dichtung bildet. Selbstverständlich kann das Koppelelement auch unter Zwischenschaltung eines Dichtelementes, wie beispielsweise eines O-Rings, axial an dem Gehäuse anliegen. Durch die durch das weitere Federelement bereitgestellte Federkraft wird einerseits das Koppelelement gegen das Gehäuse und andererseits die verdrehbare Dichtscheibe gegen die feststehende Dichtscheibe der einen Dichtscheibeneinheit gedrängt, um sowohl die Dichtheit nach außen als auch innerhalb der Ventileinrichtung zu gewährleisten.

Ferner ist bevorzugt vorgesehen, dass die feststehende Dichtscheibe der anderen Dichtscheibeneinheit durch die Federkraft des weiteren Federelements gegen einen Axialanschlag des Gehäuses gedrängt wird. Das Ventilgehäuse ist mit einem Axialanschlag vorgesehen, der mit der feststehenden Dichtscheibe der anderen Dichtscheibeneinheit zusammenwirkt. Das weitere Federelement stützt sich somit einerseits gehäuseseitig beziehungsweise an dem Koppelelement und andererseits über die eine Dichtscheibeneinheit und die andere Dichtscheibeneinheit an dem Axialanschlag des Gehäuses ab. Die Dichtscheibeneinheiten werden somit insbesondere durch die Federkraft des weiteren Federelementes in dem Ventilgehäuse in axialer Richtung vorgespannt gehalten, wodurch einerseits eine sichere Arretierung und andererseits auch ein Ausgleich von fertigungsbedingten Toleranzen auf einfache Art und Weise ermöglicht ist.

Besonders bevorzugt ist vorgesehen, dass zwischen den feststehenden Dichtscheiben eine Stützhülse angeordnet ist, wobei die feststehenden Dichtscheiben auf jeweils einer Stirnseite der Stützhülse axial aufliegen. Zweckmäßigerweise weisen dazu die feststehenden Dichtscheiben einen Durchmesser auf, der größer ist als der Außendurchmesser der verdrehbaren Dichtscheiben, so dass die feststehenden Dichtscheiben seitlich beziehungsweise radial über die verdrehbaren Dichtscheiben hinausragen. Die Stützhülse weist einen entsprechend großen Außendurchmesser auf und insbesondere auch einen Innendurchmesser, der größer ist als der Außendurchmesser der verdrehbaren Dichtscheiben, so dass eine direkte Auflage der feststehenden Dichtscheiben an den Stirnseiten der Stützhülse möglich ist, ohne den Betrieb der verdrehbaren Dichtscheiben zu beeinträchtigen. Durch die Stützhülse werden Axialkräfte direkt von der feststehenden Dichtscheibe der einen Dichtscheibeneinheit auf die feststehende Dichtscheibe der anderen Dichtscheibeneinheit übertragen. Insbesondere lässt sich dadurch auf vorteilhafte Weise die Federkraft des weiteren Federelementes von der einen Dichtscheibeneinheit zu der anderen Dichtscheibeneinheit leiten. Durch die Stützhülse wird das Federelement, das zwischen den beiden Dichtscheibeneinheiten vorgesehen ist, überbrückt, und gleichzeitig ein Mindestabstand zwischen den beiden Dichtscheibeneinheiten, insbesondere zwischen den beiden feststehenden Dichtscheiben der Dichtscheibeneinheiten gewährleistet. Liegt die feststehende Dichtscheibe der anderen Dichtscheibeneinheit an dem Axialanschlag des Gehäuses an, so wird die Kraft des weiteren Federelementes direkt von der einen Dichtscheibeneinheit über die Stützhülse auf die andere Dichtscheibeneinheit und auf das Gehäuse übertragen. Der Kraftverlauf verläuft somit von dem weiteren Federelement über die eine verdrehbare Dichtscheibe der einen Dichtscheibeneinheit, die feststehende Dichtscheibe der einen Dichtscheibeneinheit, die Stützhülse und die feststehende Dichtscheibe der anderen Dichtscheibeneinheit in den Axialanschlag des Ventilgehäuses.

Weiterhin ist bevorzugt vorgesehen, dass die Betätigungswelle an den Dichtscheibeneinheiten axial verlagerbar gehalten ist. Bezüglich der Dichtscheibeneinheiten lässt sich somit die Betätigungswelle axial verschieben, wodurch einerseits ein Toleranzausgleich gewährleistet ist, und andererseits eine Überbestimmung der Dichtscheibeneinheiten und deren Anordnung vermieden wird, so dass die Dichtheit der Ventileinrichtung zu jeder Zeit gewährleistet ist.

Weiter ist bevorzugt vorgesehen, dass die Betätigungswelle zumindest im Bereich der Dichtscheibeneinheiten eine polygonförmige Außenkontur aufweist. Im Querschnitt gesehen weist die Betätigungswelle somit einen von einer Kreisform abweichenden Querschnitt auf, so dass eine formschlüssige Verdrehsicherung mit den zu verdrehenden Dichtscheiben der Dichtscheibeneinheiten herstellbar beziehungsweise hergestellt ist. Dabei kann vorgesehen sein, dass die verdrehbaren Dichtscheiben eine Öffnung mit einer entsprechenden Kontur aufweisen, die formschlüssig mit der Betätigungswelle zusammenwirken, um die Verdrehsicherung zu bilden. Durch die formschlüssige Verdrehsicherung, die eine Mitnahme der verdrehbaren Dichtscheiben bei einer Betätigung der Betätigungswelle zu jeder Zeit gewährleistet, wird auf besonders einfache Art und Weise ein sicherer Betrieb der Ventileinrichtung zum Verstellen der Durchströmungsquerschnitte gewährleistet.

Weiterhin ist bevorzugt vorgesehen, dass jede verdrehbare Dichtscheibe eine mittige Aussparung aufweist, durch welche die Betätigungswelle geführt ist, wobei in der jeweiligen Aussparung jeweils ein Einsatzteil angeordnet ist, das in Verdrehrichtung formschlüssig mit der jeweiligen verdrehbaren Dichtscheibe und/oder mit der Betätigungswelle verbunden ist. Im Unterschied zu der vorhergehenden Ausführungsform ist hierbei also vorgesehen, dass die Betätigungswelle nicht direkt mit den verdrehbaren Dichtscheiben verbunden ist, sondern durch ein die beiden miteinander verbindendes Einsatzteil, das in der Aussparung der jeweiligen Dichtscheibe angeordnet ist. Durch das Vorsehen eines Einsatzelementes wird unter anderem erreicht, dass die Dichtscheiben und die Betätigungswelle jeweils aus einem Material gefertigt werden können, das für die jeweilige Aufgabe optimal ist. So ist insbesondere vorgesehen, dass die Dichtscheiben aus einem Keramikwerkstoff gefertigt sind, und die Betätigungswelle aus Metall. Die Einsatzteile können beispielsweise aus Kunststoff gefertigt sein, um einerseits die Übertragung des Drehmomentes von der Betätigungswelle auf die keramischen Dichtscheiben sicher zu gewährleisten und andererseits weicher als die Materialien von Betätigungswelle und der jeweiligen Dichtscheibe zu sein, um bei Auftreten von Verspannungen eine Beschädigung, insbesondere der Dichtscheiben zu vermeiden. Die Einsatzteile weisen dabei vorzugsweise eine mittige Öffnung auf, deren Kontur der Außenkontur der Betätigungswelle entspricht, und eine polygonförmige Außenkontur, die mit einer entsprechend polygonförmigen Kontur der Aussparung der jeweiligen verdrehbaren Dichtscheibe eine weitere Verdrehsicherung bildet.

Vorteilhafterweise ist außerdem vorgesehen, dass zwischen zwei Einsatzteilen der jeweiligen Dichtscheibeneinheit ein Dichtelement axial verspannt angeordnet ist. Bei dem Dichtelement kann es sich insbesondere um einen O-Ring handeln. Durch das Vorsehen des Dichtelementes zwischen den beiden Einsatzteilen einer Dichtscheibeneinheit wird gewährleistet, dass das Fluid nicht zwischen den beiden Einsatzteilen in den Zwischenraum zwischen Betätigungswelle und Einsatzteil gelangen und dort zu einem Leckagestrom führen kann. Durch das Dichtelement wird somit die Dichtheit beziehungsweise der Dichtheitsgrad der Ventileinrichtung weiter erhöht.

Weiterhin ist bevorzugt vorgesehen, dass zumindest eines der Einsatzteile wenigstens ein Führungselement für eines der Federelemente aufweist. Zumindest eines der Federelemente, insbesondere wenn es als Schraubenfeder ausgebildet ist, wird somit durch das entsprechende Einsatzteil insbesondere radial geführt gehalten. Dadurch wird die Stabilität der Ventileinrichtung und insbesondere die Funktion des Federelementes dauerhaft gewährleistet. Insbesondere kann vorgesehen sein, dass die Einsatzteile, die in den Dichtscheiben liegen, welchen jeweils eines der Federelemente zugeordnet ist, entsprechende Führungselemente aufweisen. Vorzugsweise weisen alle Einsatzteile entsprechende Führungselemente auf, wobei insbesondere die Federelemente derart gleich gestaltet sind, dass sie mit den Führungselementen jedes Einsatzteils zusammenwirken können. Dadurch können die Einsatzteile identisch zueinander ausgebildet und die Herstellungskosten verringert werden. Auch wird eine Fehlmontage der Einsatzteile dadurch auf einfache Art und Weise vermieden.

Ferner ist bevorzugt vorgesehen, dass die feststehenden Dichtscheiben jeweils wenigstens einen Radialvorsprung und/oder eine Radialvertiefung aufweisen, die mit einer Radialvertiefung beziehungsweise mit einem Radialvorsprung des Ventilgehäuses zur Verdrehsicherung zusammenwirken. Hierdurch wird also eine formschlüssige Verdrehsicherung und damit ist das Feststehen der feststehenden Dichtscheiben mit dem Ventilgehäuse gewährleistet, so dass bei einer Betätigung der Betätigungswelle nur die verdrehbaren Dichtscheiben und nicht die feststehende Dichtscheibe gedreht werden.

Im Folgenden soll die Erfindung anhand eines Ausführungsbeispiels näher erläutert werden. Dazu zeigen im Folgenden:
- Figur 1: eine Ventileinrichtung in einer Seitenansicht,
- Figur 2: eine Schnittdarstellung der Ventileinrichtung,
- Figur 3: eine perspektivische Schnittdarstellung der Ventileinrichtung,
- Figur 4: eine erste Detailansicht der Ventileinrichtung in einer perspektivischen Darstellung,
- Figur 5: eine zweite Detailansicht der Ventileinrichtung in einer Schnittdarstellung,
- Figur 6: eine dritte Detailansicht der Ventileinrichtung in einer perspektivischen Darstellung,
- Figur 7: eine vierte Detailansicht der Ventileinrichtung in einer perspektivischen Darstellung,
- Figur 8: eine fünfte Detailansicht der Ventileinrichtung in einer perspektivischen Darstellung und
- Figur 9: eine sechste Detailansicht der Ventileinrichtung in einer perspektivischen Darstellung.

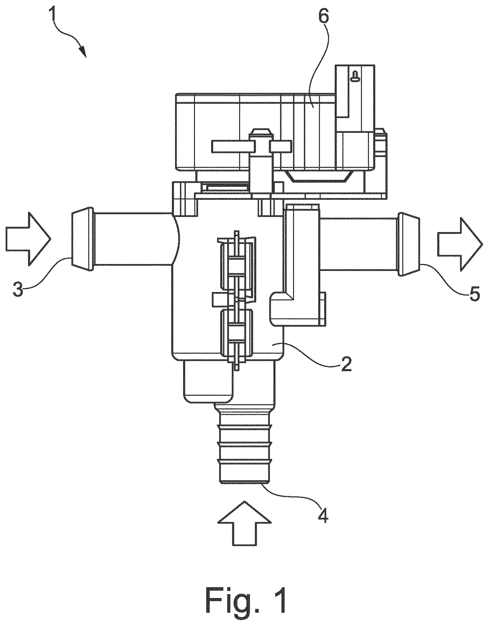

Figur 1 zeigt in einer Draufsicht eine Ventileinrichtung 1, die zum Steuern oder Regeln von Fluidströmen, beispielsweise in einem Kühlkreislauf eines Kraftfahrzeugs ausgebildet ist. Die Ventileinrichtung1 weist dazu ein Ventilgehäuse 2 auf, das mit drei Anschlussöffnungen 3, 4 und 5 versehen ist. Die Anschlussöffnungen 3, 4, 5 werden dabei durch Anschlussstutzen gebildet, die von dem im Wesentlichen zylinderförmigen Ventilgehäuse 2 radial (Anschlussstutzen mit Anschlussöffnungen 3 und 5) oder axial (Anschlussstutzen mit der Anschlussöffnung 4) abstehen. Weiterhin weist die Ventileinrichtung 1 eine Antriebseinrichtung 6 auf, die einer der Anschlussöffnung 4 gegenüberliegenden Seite des Ventilgehäuses 2 zugeordnet ist. Die Antriebseinrichtung 6 weist insbesondere einen ansteuerbaren Elektromotor auf.

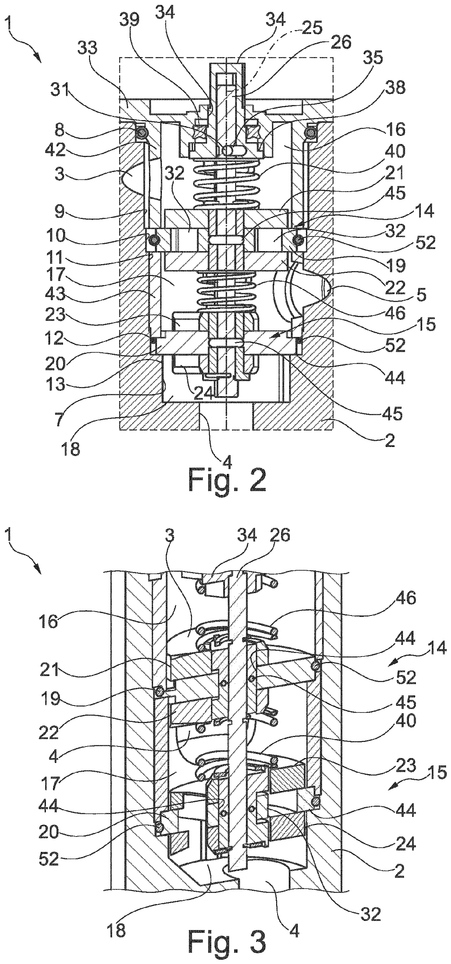

Figur 2 zeigt hierzu eine Schnittdarstellung durch das Ventilgehäuse 2. Das Ventilgehäuse 2 weist eine mehrfach gestufte zylinderförmige Axialaufnahme 7 auf. Die Axialaufnahme 7 erstreckt sich von der der Antriebseinrichtung 6 zugeordneten Stirnseite bis zu der Anschlussöffnung 4 mit einem stufenweise kleiner werdenden Durchmesser. Dabei sind vorliegend sechs Stufen 8, 9, 10, 11, 12 und 13 zusätzlich zu der Anschlussöffnung 4 vorgesehen. Die Anschlussöffnung 4 mündet - wie zuvor bereits erwähnt - axial in die Axialaufnahme 7 und zwar in den Bereich der letzten Stufe 13. Im Bereich der Stufe 11 mündet die Anschlussöffnung 5 in die Axialaufnahme 7 und im Bereich der Stufe 9 die Anschlussöffnung 3.

In der Axialaufnahme 7 sind zwei Dichtscheibeneinheiten 14, 15 axial beabstandet zueinander angeordnet, wobei die Dichtscheibeneinheit 14 zwischen den Anschlussöffnungen 3 und 4 und die Dichteinheit 15 zwischen den Anschlussöffnungen 5 und 4 liegt, so dass in der Axialaufnahme 7 drei Kammern 16, 17, 18 gebildet sind, in die jeweils eine der Anschlussöffnungen 3, 4, 5 mündet.

Die beiden Dichtscheibeneinheiten 14, 15 weisen jeweils eine feststehende Dichtscheibe 19, 20 sowie jeweils zwei verdrehbare Dichtscheiben 21, 22 beziehungsweise 23, 24 auf. Dabei ist vorgesehen, dass die verdrehbaren Dichtscheiben 21, 22 beziehungsweise 23, 24 jeweils an der ihr zugeordneten feststehenden Dichtscheibe 19 beziehungsweise 20 flächig anliegen, so dass die Dichtscheibeneinheiten 14, 15 jeweils ein Dichtscheibenpaket von drei aneinanderliegenden Dichtscheiben bilden, wobei die Dichtscheibeneinheiten 14, 15 parallel zueinander angeordnet sind, so dass sie eine gemeinsame Drehachse 25 für die verdrehbaren Dichtscheiben 21 bis 24 aufweisen. Vorzugsweise sind die Dichtscheiben 19 bis 23 aus einem Keramikmaterial gefertigt.

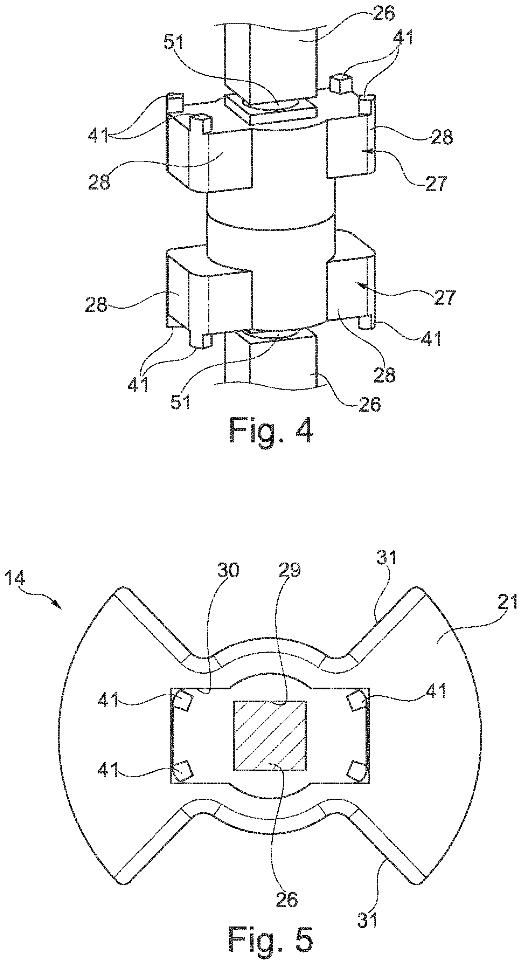

Durch die Dichtscheibeneinheiten 14, 15 erstreckt sich eine Betätigungswelle 26 hindurch, deren Rotationsachse der Drehachse 25 entspricht. Die Betätigungswelle 26 weist im Wesentlichen einen quadratischen Querschnitt auf, wie beispielsweise aus Figuren 4 und 5 ersichtlich. Zur Drehmitnahme der Dichtscheiben 21, 22 beziehungsweise 23, 24 sind auf der Betätigungswelle 26 für jede Dichtscheibeneinheit 14, 15 jeweils zwei identisch ausgebildete Einsatzteile 27 vorgesehen. Wie insbesondere in Figur 4 ersichtlich, weisen die Einsatzteile 27 in einer Seitenansicht eine T-förmige Kontur auf. In einem ersten Abschnitt sind sie dazu zylinderförmig ausgebildet, um in einem zweiten Abschnitt radial vorstehende Mitnahmeelemente 28 aufzuweisen. Die Breite der Mitnahmeelemente 28 ist dabei etwas schmaler gewählt als der Durchmesser des zylinderförmigen Abschnitts, wie beispielsweise auch in Figur 5 ersichtlich, die eine Draufsicht (in Richtung der Achse 25) auf die durch eines der Einsatzteile 27 gebildete Verdrehsicherung zeigt. Die Einsatzteile 27 weisen mittig eine Öffnung 29 auf, die einen quadratischen Querschnitt aufweist. Der quadratische Querschnitt der Öffnung 29 entspricht dabei dem quadratischen Querschnitt der Betätigungswelle 26, so dass eine formschlüssige Verdrehsicherung zwischen dem jeweiligen Einsatzteil 27 und der Betätigungswelle 26 besteht. Vorzugsweise sind die Öffnungen 29 und die Betätigungswelle 26 derart ausgebildet, dass das jeweilige Einsatzteil 27 auf die Betätigungswelle 26 aufpressbar ist, so dass das jeweilige Einsatzteil 27 im Wesentlichen durch Kraftschluss in axialer Richtung an der Betätigungswelle 26 gehalten ist. Alternativ dazu ist bevorzugt vorgesehen, dass die Betätigungswelle 26 axial in dem jeweiligen Einsatzteil 27 verlgerbar gehalten ist.

Wie insbesondere aus Figur 5 ersichtlich, die die zuvor genannte Verdrehsicherung am Beispiel der Dichtscheibe 21 zeigt, weisen die ansonsten identisch ausgebildeten Dichtscheiben 21 bis 24 mittig jeweils eine Aussparung 30 auf. Die Kontur der Aussparung 30 entspricht im Wesentlichen der Kontur des Einsatzteils 27 in dem Bereich der Mitnahmeelemente 28.

Dabei liegt das Einsatzteil 27 zumindest seitlich im Wesentlichen spielfrei in der Aussparung 30 ein. Vorzugsweise ist die Aussparung 30 etwas länger ausgebildet als die Endflächen der Vorsprünge 28 voneinander beabstandet sind, so dass in zumindest eine Richtung ein Toleranzausgleich bis ein Verlagern des jeweiligen Dichtelementes 21 bis 24 bezüglich des Einsatzteils 27 möglich ist, um beispielsweise auch temperaturbedingte Größenunterschiede kompensieren zu können. Die zwei Einsatzteile 27 einer Dichtscheibeneinheit 14, 15, sind dabei spiegelsymmetrisch zueinander angeordnet, so dass die Zylinderabschnitte einander zugewandt sind.

Die Dichtscheiben 19 und 20 weisen jeweils mittig eine Aussparung 44 auf, durch welche die Betätigungswelle 26 und die zylinderförmigen Abschnitte der Einsatzteile 27 geführt sind. Die Aussparungen 44 weisen dabei eine kreisförmige Kontur auf, so dass sie als Drehlager für den zylinderförmigen Abschnitt der Einsatzteile 27 dienen. Vorteilhafterweise sind axial zwischen den Einsatzteilen 27 der jeweiligen Dichtscheibeneinheit 14, 15 ein Dichtelement, insbesondere ein O-Ring 45, verspannt gehalten, so dass hier eine dichte Verbindung zwischen den Einsatzteilen 27 gewährleistet ist.

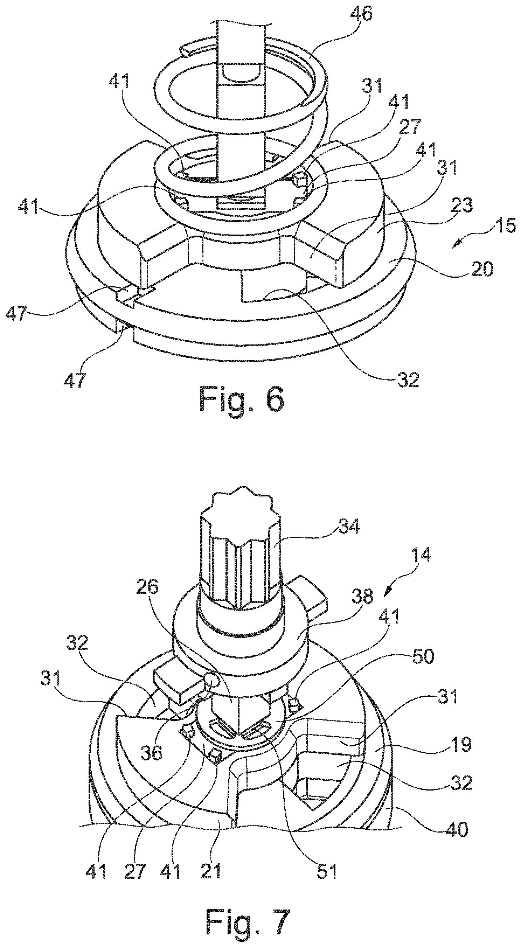

Figur 5 zeigt in einer Draufsicht auf die Dichtscheibe 21, dass diese mit zwei einander diametral gegenüberliegenden Durchströmungsöffnungen 31 versehen ist. Die Dichtscheiben 21 bis 24 weisen grundsätzlich eine kreisförmige Kontur auf. Die Durchströmungsöffnungen 31 werden durch insofern randoffene Radialvertiefungen gebildet. Die feststehenden Dichtscheiben 19, 20 weisen ebenfalls Durchströmungsöffnungen 32 auf, wie insbesondere in Figuren 2 und 3 sowie 5 und 6 gezeigt ist. Die Durchströmungsöffnungen 32 sind ebenfalls diametral einander gegenüberliegend in der jeweiligen Dichtscheibe 19, 20 ausgebildet. Wobei die Durchströmungsöffnungen 32 derart ausgebildet sind, dass sie vollständig durch die jeweilige Dichtscheibe 21, 22 beziehungsweise 23, 24 überdeckbar sind. Werden die Dichtscheiben 21 bis 24 verdreht, so dass die Durchströmungsöffnungen 31 und 32 in eine Überlappungsstellung gebracht werden, wie in Figuren 6 und 7 gezeigt, so wird ein entsprechender Durchströmungsquerschnitt zwischen den benachbarten Kammern, die durch die jeweilige Dichtscheibeneinheit 14, 15 voneinander getrennt werden, freigegeben. Die verdrehbaren Dichtscheiben 21, 22 und 23, 24 der jeweiligen Dichtscheibeneinheit 14, 15 sind dabei parallel zueinander ausgerichtet, so dass sie sich in einer Draufsicht überdecken, damit bei einem entsprechenden Verdrehen der Durchströmungsquerschnitt einer Dichtscheibeneinheit durch beide Dichtscheiben freigegeben wird. Die Dichtscheibeneinheiten 14, 15 sind grundsätzlich zumindest im Wesentlichen identisch ausgebildet, jedoch vorliegend um 90° verdreht zueinander in dem Ventilgehäuse angeordnet, so dass wenn durch die eine Dichtscheibeneinheit 14 ein maximal möglicher Durchströmungsquerschnitt freigegeben ist, die andere Dichtscheibeneinheit 15 die Kammern 17, 18 vollständig voneinander trennt.

Das Ventilgehäuse 2 wird auf der der Anschlussöffnung 4 gegenüberliegenden Stirnseite durch ein Deckelelement 33 verschlossen. Das Deckelelement 33 weist eine Öffnung auf, durch welche die Betätigungswelle 26 abschnittsweise hindurchragt. Dabei ist auf das freie Ende der Betätigungswelle 26 ein Koppelelement 34 aufgesetzt, dessen Innenkontur der quadratischen Querschnittskontur der Betätigungswelle 26 entspricht, so dass das Koppelelement 34 und die Betätigungswelle 26 drehfest miteinander verbunden sind. Zur axialen Arretierung des Koppelelementes 34 an der Betätigungswelle 26 ist vorgesehen, dass die Betätigungswelle 26 eine seitliche Vertiefung 35 aufweist und das Koppelelement 34 einen Bolzenkanal 36. Bei der Montage wird in den Bolzenkanal 36 ein Sicherungsbolzen 37 eingeschoben, wobei der Bolzenkanal 36 derart weit an die Betätigungswelle 26 heranführt, dass er abschnittsweise durch die Vertiefung 35 mitgebildet wird. Der Bolzen 37 wird dadurch zwischen der Betätigungswelle 26 und dem Koppelelement 34 verspannt und letzteres axial an der Betätigungswelle 26 arretiert. Vorzugsweise ist das Koppelement 34 aus Kunststoff gefertigt.

Das Koppelelement 34 weist an seinem der Axialaufnahme 7 zugewandten Ende eine Radialauskragung 38 auf, wie auch in Figur 7 gezeigt. Die Auskragung 38 erstreckt sich über den gesamten Umfang des Koppelelementes 34. Die Auskragung 38 dient als Axialanschlag für das Koppelelement 34 an dem Gehäusedeckel 33, wobei zwischen dem Gehäusedeckel 33 und der Radialauskragung 38 vorzugsweise ein Dichtring 39 gehalten ist, so dass Flüssigkeit aus der Kammer 16 nicht durch den Deckel 13 austreten kann.

Die radiale Auskragung 38 bildet weiterhin einen Anschlag für ein Federelement 40, das vorliegend als Schraubenfeder ausgebildet und zwischen dem Koppelement 34 und der Dichtscheibe 21 der Dichtscheibeneinheit 14 vorgespannt gehalten ist. Zur Führung der Schraubenfeder ist vorgesehen, dass das entsprechende Einsatzteil 27 mehrere Führungselemente 41 aufweist, die zur seitlichen Führung der Schraubenfeder dienen. Dadurch wird ein Wegrutschen des Federelements 40 auf der Dichtscheibe 21 sicher verhindert, wie beispielsweise in Figur 6 gezeigt.

Der Gehäusedeckel 33 weist weiterhin einen zylinderförmigen Hülsenabschnitt 42 auf, dessen Innendurchmesser größer ist als der Außendurchmesser der Dichtscheibe 21 und kleiner als der Innendurchmesser der Stufe 9 der Aussparung 7. Der Hülsenabschnitt 42 erstreckt sich axial derart weit, dass er an seiner freien Stirnseite auf der feststehenden Dichtscheibe 19 der Dichtscheibeneinheit 14 axial aufliegt. Durch das Befestigen des Gehäusedeckels 33 an dem Ventilgehäuse 2 wird durch den Hülsenabschnitt 42 die Dichtscheibe 19 in die Aussparung 7 eingeschoben. Selbstverständlich weist der Hülsenabschnitt 42 in seiner Mantelwand entsprechende Öffnungen für die fluidtechnische Verbindung mit den Anschlussöffnungen 3 auf. Weiterhin drängt das Federelement 40, das sich an dem Koppelelement 34 und damit gehäuseseitig an dem Gehäusedeckel 33 abstützt, die Dichtscheibe 21 gegen die Dichtscheibe 19, so dass diese dichtend aneinander anliegen.

In der Kammer 17 ist, wie insbesondere in Figuren 2 und 3 gezeigt, eine Stützhülse 43 vorgesehen, die an ihren freien Stirnenden an der Dichtscheibe 19 einerseits und der Dichtscheibe 20 andererseits axial anliegt. Die Stützhülse 43 weist somit ebenfalls einen Innendurchmesser auf, der größer ist als der Außendurchmesser der Dichtscheiben 23 und 22. Durch die Federkraft des Federelements 40 wird die Dichtscheibe 21 gegen die Dichtscheibe 19, und dadurch die Dichtscheibe 19 gegen die Stützhülse 43 gedrängt, welche wiederum die Dichtscheibe 22 mit einer Axialkraft beaufschlagt und diese gegen einen Axialanschlag 44 des Ventilgehäuses 2 drängt. Der Axialanschlag 44 wird dabei durch den Übergang von der Stufe 12 zu der Stufe 13 gebildet. Durch das Federelement 40 und die Stützhülse 43 werden somit die Dichtscheibeneinheiten 14 und 15 in der Axialaussparung 7 gehalten. Die Stützhülse 43 und der Hülsenabschnitt 42 gewährleisten dabei, dass ein Mindestabstand von den Dichtscheibeneinheiten 14, 15 zueinander, sowie von der Dichtscheibeneinheit 14 zu dem Koppelelement 34 stets eingehalten wird.

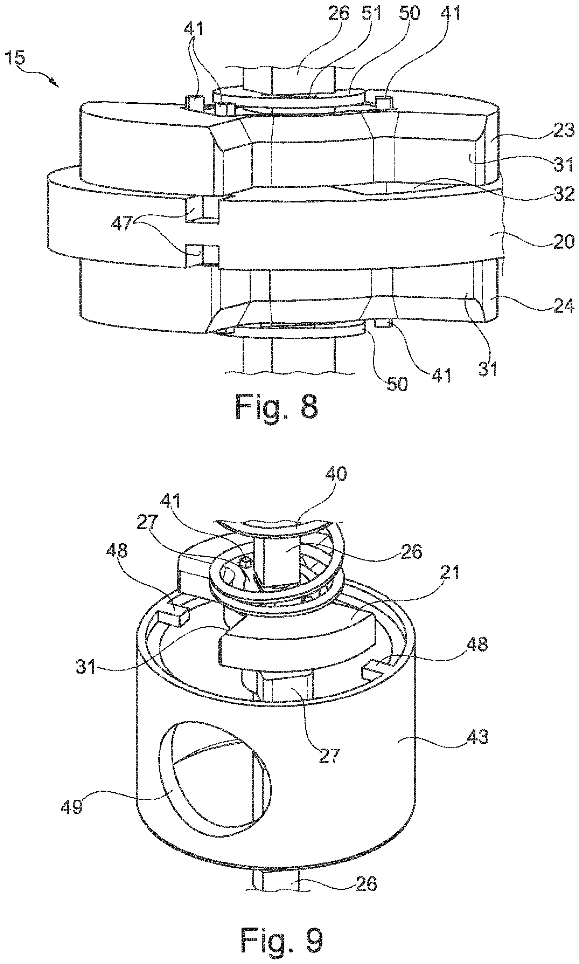

Zwischen den Dichtscheiben 22 und 23 ist außerdem ein Federelement 46 axial vorgespannt gehalten, wobei das Federelement 46 ebenfalls als Schraubenfeder ausgebildet ist, wie beispielsweise in Figuren 2, 3 und 6 ersichtlich. Figur 6 zeigt hierbei eine Detailansicht der Steuereinheit 15 in einer perspektivischen Darstellung. Dabei liegt das Federelement 46 auf der Dichtscheibe 23 auf. Das Einsatzteil 27, das in der Dichtscheibe 23 eingesetzt ist, weist die zuvor bereits genannten Führungselemente 41 auf, durch welche das Federelement 46 geführt ist. Die Dichtscheibe 20 weist an ihrem Außenumfang wenigstens eine Radialvertiefung 47 auf. Die Stützhülse 43 weist mit der Radialvertiefung 47 korrespondierende Radialvorsprünge 48 auf, wie in Figur 9 gezeigt. Bei der Montage gelangen die Radialvorsprünge 48 in jeweils eine Radialvertiefung 47 der Dichtscheibe 20, wodurch eine formschlüssige Verdrehsicherung zwischen Dichtscheibe 20 und Stützhülse 43 hergestellt wird. Die Dichtscheibe 19 ist mit entsprechenden Radialvertiefungen 47 versehen, die mit dem entsprechenden Radialvorsprung 48 der Stützhülse 43 zusammenwirken. Auch die Stützhülse 43 weist zweckmäßigerweise eine Öffnung 49 auf, um die fluidtechnische Verbindung von der Kammer 17 mit der Anschlussöffnung 5 bereitzustellen.

Figur 8 zeigt eine Detailansicht der Dichtscheibeneinheit 14, die gleichermaßen auch für die Dichtscheibeneinheit 15 gilt. Zur Sicherung der Dichtscheibeneinheiten 14 an der Betätigungswelle 26 sind Sicherungsringe 50 vorgesehen, welche sich in eine jeweils über den Umfang der Betätigungswelle 26 erstreckende Radialvertiefung 51 bereichsweise hineinerstrecken, wie beispielsweise auch in Figur 7 gezeigt. Die Sicherungsringe 50 sind dabei jeweils auf einer Seite der Dichtscheibeneinheit 14 beziehungsweise 15 angeordnet, so dass diese axial durch die Sicherungsringe 50 an der Betätigungswelle 26 gesichert sind. Bei einer Montage kann dadurch auf einfache Art und Weise eine Vormontageeinheit, insbesondere bestehend aus den Dichtscheibeneinheiten 14, 15 und der dazwischen angeordneten Stützhülse 43 und dem dazwischen verspannten Federelement 46 gebildet werden. Damit ist eine besonders einfache Vormontage und Montage der Ventileinrichtung 1 möglich. Die Betätigungswelle 26 ist dabei axial zu den Dichtscheibeneinheiten 14 und 15 verlagebar gehalten, um einen Toleranzausgleich und das Kompensieren von beispielsweise temperaturbedingten Größenänderungen zu ermöglichen.

Alternativ zu dem Vorsehen eines entsprechenden Sicherungsrings 50 an dem der Anschlussöffnung 4 zugewandten Ende der Betätigungswelle 26, kann auch ein Axialanschlag durch eine Durchmesser-, beziehungsweise Querschnittsvergrößerung der Betätigungswelle 26 gebildet sein, bis zu welchem die Dichtscheibeneinheit 15 mit der Dichtscheibe 24 aufschiebbar ist.

Wie in Figuren 2, 3, 6 und 7 gezeigt, sind den Mantelaußenflächen der Dichtscheiben 19, 20 Dichtringe 52 zugeordnet, die beispielsweise als O-Ringe ausgebildet sind. Die Dichtringe werden radial zwischen den Dichtscheiben 19 und 20 und der Innenseite der Axialaufnahme 7 bei der Montage verspannt. Die Dichtscheibe 19 liegt dabei im Bereich der Stufe 10 und die Dichtscheibe 20 im Bereich der Stufe 12. Dadurch, dass die Stufen unterschiedlichen Durchmesser, in Richtung der Anschlussöffnung 4 kleiner werdend, vorgesehen sind, wird die Montage, insbesondere das Einschieben der Vormontageeinheit in die Axialaufnahme 7 vereinfacht, da ein Verklemmen in der Axialaufnahme 7 verhindert wird. Darüber hinaus ergibt sich dadurch ein besseres Reibverhalten beim Einschieben der zuvor beschriebenen Vormontageeinheit.

Vorzugsweise weist die Vormontageeinheit noch das Koppelelement 34 und die zwischen Koppelelement 34 und Dichtscheibe 21 vorgespannte Schraubenfeder auf. Da das Koppelelement 34 durch den Bolzen 37 an der Betätigungswelle 26 ebenfalls gehalten ist, kann dadurch eine kompakte Vormontageeinheit mit den wesentlichen Elementen der Ventileinrichtung 1 zur Verfügung gestellt und in die Axialaufnahme 7 eingeführt werden. Bei der Montage muss im Anschluss lediglich noch der Gehäusedeckel 33 auf das Ventilgehäuse 2 aufgesetzt und daran befestigt werden. Anschließend kann die Antriebseinrichtung 6 mit auf das Ventilgehäuse 2 aufgesetzt und das Koppelelement 34 mit der Antriebseinheit wirkverbunden werden.

Im Betrieb der Ventileinrichtung 1 werden die Durchströmungsquerschnitte der Dichtescheibeneinheit 15 und der Dichtscheibeneinheit 14 durch ein Betätigen der Betätigungswelle 26 mittels der Antriebseinrichtung 6 eingestellt. Vorzugsweise können der Betätigungswelle 26 und/oder dem Koppelelement 34 Radialanschläge zugeordnet sein, die das Verdrehen der Betätigungswelle 26 über einen bestimmten Winkel hinaus verhindern, um Fehleinstellungen von vornherein zu vermeiden.

Unabhängig davon, wie die Druckverhältnisse in den Kammern 16, 17 und 18 sich verhalten, ist aufgrund der vorteilhaften Gestaltung der Ventileinrichtung 1 gewährleistet, dass diese stets dicht ist und keine Leckageströme zulässt. Dadurch, dass die feststehenden, also die verdrehgesicherten Dichtscheiben 19, 20 beidseitig von verdrehbaren Dichtscheiben 21, 22 beziehungsweise 23, 24 eingefasst sind, wird stets eine dichte Verbindung gewährleistet, unabhängig davon, in welche Richtung ein Druckgefälle über die jeweilige Dichtscheibeneinheit 14, 15 besteht.

## Patentansprüche

1. Ventileinrichtung (1), mit einem Ventilgehäuse (2), das wenigstens drei Anschlussöffnungen (3-5) aufweist, die in jeweils eine Kammer (16-18) der Ventileinrichtung (1) münden, mit zwei voneinander beabstandet angeordneten Dichtscheibeneinheiten (14,15), die jeweils zwischen zwei benachbarten Kammern (16,17,18) liegen und eine feststehende Dichtscheibe (19,20) und mindestens eine verdrehbare Dichtscheibe (21-24) aufweisen, wobei die verdrehbare Dichtscheiben (21-24) und die feststehenden Dichtscheiben (19,20) jeder Dichtscheibeneinheit (14,15) jeweils mindestens eine Durchströmungsöffnung (31,32) aufweisen, um in zumindest einer Überlappungsstellung der Durchströmungsöffnungen (31,32) einen Durchströmungsquerschnitt zwischen den jeweils benachbarten Kammern (16-18) freizugeben, und mit einer Betätigungswelle (26), die mit den verdrehbaren Dichtscheiben (21-24) drehfest verbunden ist, **dadurch gekennzeichnet, dass** jede Dichtscheibeneinheit (14,15) zwei verdrehbare Dichtscheiben (21-24) aufweist, die jeweils mit der Betätigungswelle (26) drehfest verbunden sind und auf jeweils einer Stirnseite der jeweiligen feststehenden Dichtscheibe (19,20) aufliegen.

2. Ventileinrichtung nach Anspruch 1, **dadurch gekennzeichnet, dass** zwischen den beiden Dichtscheibeneinheiten (14,15) ein Federelement (46), insbesondere eine Schraubenfeder, axial vorgespannt angeordnet ist, wobei sich das Federelement (46) einendig an einer der verdrehbaren Dichtscheiben (22) der einen Dichtscheibeneinheit (14) und anderendig an einer der verdrehbaren Dichtscheiben (23) der anderen Dichtscheibeneinheit (15) abstützt.

3. Ventileinrichtung nach einem der vorhergehenden Ansprüche, **dadurch gekennzeichnet, dass** der einen Dichtscheibeneinheit (14) ein weiteres Federelement (40), insbesondere eine weitere Schraubenfeder, zugeordnet ist, das sich einendig gehäuseseitig und anderendig an der einen Dichtscheibeneinheit (14) abstützt.

4. Ventileinrichtung nach einem der vorhergehenden Ansprüche, **dadurch gekennzeichnet, dass** das weitere Federelement (40) zwischen einer der verdrehbaren Dichtscheiben (21) der einen Dichtscheibeneinheit (14) und einem ein Ende der Betätigungswelle (26) zugeordneten Koppelement (34) axial vorgespannt ist.

5. Ventileinrichtung nach einem der vorhergehenden Ansprüche, **dadurch gekennzeichnet, dass** die feststehende Dichtscheibe (20) der anderen Dichtscheibeneinheit (15) durch die Federkraft des weiteren Federelementes (40) gegen einen Axialanschlag (44) des Ventilgehäuses (2) gedrängt wird.

6. Ventileinrichtung nach einem der vorhergehenden Ansprüche, **dadurch gekennzeichnet, dass** zwischen den feststehenden Dichtscheiben (19,20) eine Stützhülse (43) angeordnet ist, wobei die feststehenden Dichtscheiben (19,20) auf jeweils einer Stirnseite der Stützhülse (43) axial aufliegen.

7. Ventileinrichtung nach einem der vorhergehenden Ansprüche, **dadurch gekennzeichnet, dass** die Betätigungswelle (26) zu den Dichtscheibeneinheiten (14,15) axial verlagerbar ist.

8. Ventileinrichtung nach einem der vorhergehenden Ansprüche, **dadurch gekennzeichnet, dass** die Betätigungswelle (26) zumindest im Bereich der Dichtscheibeneinheiten (14,15) eine polygonförmige Außenkontur aufweist.

9. Ventileinrichtung nach einem der vorhergehenden Ansprüche, **dadurch gekennzeichnet, dass** jede verdrehbare Dichtscheibe (21-24) eine mittige Aussparung (30) aufweist, durch welche die Betätigungswelle (26) geführt ist, wobei in der jeweiligen Aussparung (30) jeweils ein Einsatzteil (27) angeordnet ist, das in Verdrehrichtung formschlüssig mit der jeweiligen verdrehbaren Dichtscheibe (21-24) und/oder mit der Betätigungswelle (26) verbunden ist.

10. Ventileinrichtung nach einem der vorhergehenden Ansprüche, **dadurch gekennzeichnet, dass** zwischen zwei Einsatzteilen (27) der jeweiligen Dichtscheibeneinheit (14,15) ein Dichtelement (45) axial vorgespannt angeordnet ist.

11. Ventileinrichtung nach einem der vorhergehenden Ansprüche, **dadurch gekennzeichnet, dass** zumindest eines der Einsatzteile (27) wenigstens ein Führungselement (41) für zumindest eines der Federelemente (40,46) aufweist.

12. Ventileinrichtung nach einem der vorhergehenden Ansprüche, **dadurch gekennzeichnet, dass** die feststehenden Dichtscheiben (19,20) wenigstens eine Radialvorsprung und/oder eine Radialvertiefung (47) aufweisen, die mit einer Radialvertiefung beziehungsweise mit einem Radialvorsprung (48) des Ventilgehäuses (2) zur Verdrehsicherung zusammenwirken.

13. Ventileinrichtung nach den Ansprüchen 1, 2, und 6, **dadurch gekennzeichnet, dass** die Dichtscheibeneinheiten (14,15), die durch Sicherungsringe (50), welche jeweils auf einer Seite der jeweiligen Dichtscheibeneinheit (14,15) angeordnet sind, axial an der Betätigungswelle gesichert sind, die Stützhülse (43) und das Federelement (46) als Vormontageeinheit in eine zylinderförmige Axialaufnahme (7) des Ventilgehäuses (2) eingeschoben sind.

## Claims

1. A valve device (1) comprising a valve housing (2) that has at least three connection openings (3-5) each ending in a respective chamber (16-18) of the valve device (1), two seal disc units (14, 15) that are arranged spaced apart from each other and are each located between two neighbouring chambers (16, 17, 18) and have at least one stationary seal disc (19, 20) and at least one rotatable seal disc (21-24), wherein the rotatable seal discs (21-24) and the stationary seal discs (19, 20) of each seal disc unit (14, 15) each have at least one flow opening (31, 32) to release a flow cross-section between the respective neighbouring chambers (16-18) in at least one overlap position of the flow openings (31, 32), and an actuating shaft (26) which is non-rotatably connected to the rotatable seal discs (21-24), **characterised in that** each seal disc unit (14, 15) has two rotatable seal discs (21-24) which are each non-rotatably connected to the actuating shaft (26) and are each resting on a respective front face of the respective stationary seal disc (19, 20).

2. The valve device in accordance with claim 1, **characterised in that** a spring element (46), more particularly a helical spring, is arranged axially biased between the two seal disc units (14, 15), wherein the spring element (46) is, at one end, supported against one of the rotatable seal discs (22) of the one seal disc unit (14) and, at the other end, against one of the rotatable seal discs (23) of the other seal disc unit (15).

3. The valve device in accordance with any one of the preceding claims, **characterised in that** a further spring element (40), more particularly a further helical spring, which is, at one end, supported against the housing and, at the other end, against the one seal disc unit (14), is allocated to the one seal disc unit (14).

4. The valve device in accordance with any one of the preceding claims, **characterised in that** the further spring element (40) is axially biased between one of the rotatable seal discs (21) of the one seal disc unit (14) and a coupling element (34) that is allocated to one end of the actuating shaft (26).

5. The valve device in accordance with any one of the preceding claims, **characterised in that** the stationary seal disc (20) of the other seal disc unit (15) is urged against an axial stop (44) of the valve housing (2) by the spring force of the further spring element (40).

6. The valve device in accordance with any one of the preceding claims, **characterised in that** a support bushing (43) is arranged between the stationary seal discs (19, 20), wherein the stationary seal discs (19, 20) are axially resting on one front face of the support bushing (43) each.

7. The valve device in accordance with any one of the preceding claims, **characterised in that** the actuating shaft (26) is axially displaceable with respect to the seal disc units (14, 15).

8. The valve device in accordance with any one of the preceding claims, **characterised in that** the actuating shaft (26) has a polygonally shaped outer contour at least in the region of the seal disc units (14, 15).

9. The valve device in accordance with any one of the preceding claims, **characterised in that** each rotatable seal disc (21-24) has a central cut-out (30) through which the actuating shaft (26) is passed, wherein a respective insertion part (27) is arranged in each of the respective cut-outs (30), the insertion parts being connected to the respective rotatable seal disc (21-24) and/or the actuating shaft (26) in the direction of rotation in a positively locking manner.

10. The valve device in accordance with any one of the preceding claims, **characterised in that** a sealing element (45) is arranged axially biased between two insertion parts (27) of the respective seal disc unit (14, 15).

11. The valve device in accordance with any one of the preceding claims, **characterised in that** at least one of the insertion parts (27) has at least one guide element (41) for at least one of the spring elements (40, 46).

12. The valve device in accordance with any one of the preceding claims, **characterised in that** the stationary seal discs (19, 20) have at least one radial projection and/or one radial recess (47) which interact with a radial recess and/or a radial projection (48) of the valve housing (2) to provide an anti-rotation lock.

13. The valve device in accordance with claims 1, 2 and 6, **characterised in that** the seal disc units (14, 15) which are axially secured to the actuating shaft by means of locking rings (50) that are each arranged on one side of the respective seal disc unit (14, 15), the support bushing (43) and the spring element (46) are inserted into a cylindrical axial receptacle (7) of the valve housing (2) as a pre-assembly unit.

## Revendications

1. Dispositif de soupape (1) avec un compartiment de soupape (2) qui présente au moins trois ouvertures de raccord (3 à 5) qui débouchent à chaque fois dans une chambre (16 à 18) du dispositif de soupape (1), avec deux modules de disque d'étanchéité (14, 15) disposés de manière écartée l'un de l'autre qui se situent chacun entre deux chambres voisines (16, 17, 18) et présentent un disque d'étanchéité fixe (19, 20) et au moins un disque d'étanchéité pouvant être tordu (21 à 24), dans lequel les disques d'étanchéité pouvant être tordus (21 à 24) et les disques d'étanchéité fixes (19, 20) de chaque module de disque d'étanchéité (14, 15) présentent chacun au moins une ouverture de passage (31, 32) pour libérer une section transversale de passage entre les chambres respectivement voisines (16 à 18) dans au moins une position de chevauchement des ouvertures de passage (31, 32), et avec un arbre d'actionnement (26) qui est connecté de manière fixe en rotation aux disques d'étanchéité pouvant être tordus (21 à 24), **caractérisé en ce que** chaque module de disque d'étanchéité (14, 15) présente deux disques d'étanchéité pouvant être tordus (21 à 24) qui sont chacun connectés de manière fixe en rotation à l'arbre d'actionnement (26) et reposent à chaque fois sur un côté frontal du disque d'étanchéité fixe respectif (19, 20).

2. Dispositif de soupape selon la revendication 1, **caractérisé en ce qu'**un élément de ressort (46), notamment un ressort hélicoïdal, est disposé de manière précontrainte axialement entre les deux modules de disque d'étanchéité (14, 15), dans lequel l'élément de ressort (46) s'appuie à une extrémité sur un des disques d'étanchéité pouvant être tordus (22) d'un des modules de disque d'étanchéité (14) et à l'autre extrémité sur un des disques d'étanchéité pouvant être tordus (23) de l'autre module de disque d'étanchéité (15).

3. Dispositif de soupape selon une des revendications précédentes, **caractérisé en ce qu'**un autre élément de ressort (40), notamment un autre ressort hélicoïdal, est associé à un des modules de disque d'étanchéité (14), lequel s'appuie à une extrémité du côté du compartiment et à l'autre extrémité sur le module de disque d'étanchéité en question (14).

4. Dispositif de soupape selon une des revendications précédentes, **caractérisé en ce que** l'autre élément de ressort (40) est précontraint axialement entre un des disques d'étanchéité pouvant être tordus (21) d'un des modules de disque d'étanchéité (14) et un élément de couplage (34) associé à une extrémité de l'arbre d'actionnement (26).

5. Dispositif de soupape selon une des revendications précédentes, **caractérisé en ce que** le disque d'étanchéité fixe (20) de l'autre module de disque d'étanchéité (15) est poussé par la force élastique de l'autre élément de ressort (40) contre une butée axiale (44) du compartiment de soupape (2).

6. Dispositif de soupape selon une des revendications précédentes, **caractérisé en ce qu'**un manchon d'appui (43) est disposé entre les disques d'étanchéité fixes (19, 20), dans lequel les disques d'étanchéité fixes (19, 20) reposent axialement à chaque fois sur un côté frontal du manchon d'appui (43).

7. Dispositif de soupape selon une des revendications précédentes, **caractérisé en ce que** l'arbre d'actionnement (26) peut être déplacé axialement vers les modules de disque d'étanchéité (14, 15).

8. Dispositif de soupape selon une des revendications précédentes, **caractérisé en ce que** l'arbre d'actionnement (26) présente un contour externe polygonal au moins dans la région des modules de disque d'étanchéité (14, 15).

9. Dispositif de soupape selon une des revendications précédentes, **caractérisé en ce que** chaque disque d'étanchéité pouvant être tordu (21 à 24) présente un évidement central (30) à travers lequel l'arbre d'actionnement (26) est guidé, dans lequel un insert (27) est à chaque fois disposé dans l'évidement respectif (30), lequel est connecté dans le sens de torsion par conjugaison de formes au disque d'étanchéité pouvant être tordu respectif (21 à 24) et/ou à l'arbre d'actionnement (26).

10. Dispositif de soupape selon une des revendications précédentes, **caractérisé en ce qu'**un élément d'étanchéité (45) est disposé de manière précontrainte axialement entre deux inserts (27) du module de disque d'étanchéité respectif (14, 15).

11. Dispositif de soupape selon une des revendications précédentes, **caractérisé en ce qu'**au moins un des inserts (27) présente au moins un élément de guidage (41) pour au moins un des éléments de ressort (40, 46).

12. Dispositif de soupape selon une des revendications précédentes, **caractérisé en ce que** les disques d'étanchéité fixes (19, 20) présentent au moins une saillie radiale et/ou un renfoncement radial (47) qui coopèrent avec un renfoncement radial ou avec une saillie radiale (48) du compartiment de soupape (2) en vue du verrouillage contre la torsion.

13. Dispositif de soupape selon les revendications 1, 2 et 6, **caractérisé en ce que** les modules de disque d'étanchéité (14, 15) qui sont sécurisés axialement sur l'arbre d'actionnement par des bagues de retenue (50) qui sont chacune disposées sur un côté du module de disque d'étanchéité respectif (14, 15), le manchon d'appui (43) et l'élément de ressort (46) sont insérés en tant que module de prémontage dans un logement axial cylindrique (7) du compartiment de soupape (2).
